# EUROPEAN PATENT APPLICATION

(11) **EP 1 061 760 A1**
(43) Date of publication of application: **20.12.2000**
(21) Application number: 99304782.8
(22) Date of filing: 18.06.1999
(51) Int. Cl.: H04Q 7/38

(54) **Method and system for channel allocation**

(71) Applicant: LUCENT TECHNOLOGIES INC., Murray Hill, New Jersey 07974-0636 (US)
(72) Inventor: Cao, Qiang, Swindon SN2 3XL (GB); Costa, Mauro, Chippenham SN5 6PP (GB); Hegerty, Kevin Michael William, Cowley, Oxford OX4 2JJ (GB); Roberts, Michael, Southend-on-Sea SS2 5EB (GB)
(74) Representative: Williams, David John

(57) **Abstract**

A cellular radio telecommunications network is managed so that resources in a cell are allocated on request up to a predetermined level, and if a subsequent request for a new call is made, that call is placed in a queue while the unallocated resource is reserved. The unallocated resource can be made available for a call handover request. The predetermined level of resource can be determined by a network operator, and can be varied depending on the network and on the priority levels of existing calls in the cell and the new call.

## Description

This invention relates to a cellular telephone network, and relates especially to a network having an improved perceived quality of service.

In a cellular telephone network, it is more acceptable for a call to be slow to connect initially - a waiting period for a connection of up to 20 seconds is a built-in feature of some Global Mobile Systems - than for a call to fail part way through before it is deliberately ended; the latter position causes far greater user irritation than the former.

Yet cells within networks are often congested, with considerable pressure placed on resources and resource allocation. When a user moves across a cell boundary, cell fading occurs and the call must be handed over to another cell very quickly; that cell may already be congested and such an urgent request for handover places additional pressure on resource allocation.

It is the object of the invention to provide a method and apparatus in which perceived quality of service can be maintained or improved without the need for additional resources.

According to the invention, in a cellular radio telecommunications network, a method of managing resources in a cell comprises allocating available resources on request up to a predetermined level, and if a subsequent request for a new call is made, placing that call in a queue while reserving the allocated resource.

The resource to be allocated may be codes in a Code Division Multiplex Access (CDMA) network or time slots in a Time Division Multiplex Access (TDMA) network.

The predetermined level of resource may be selected by a network operator, and may depend on the type of network and on the level of quality of service required. For example, the predetermined amount may be set at one level for a highly congested, high throughput urban network, and at a different level for a network associated, for example, with a motorway. The predetermined amount may be set mainly by a required quality of service or mainly by a statistically predicted number of urgent call handover requests likely to be made.

Also according to the invention a cellular radio telecommunications network comprising a plurality of mobile stations; a plurality of base stations arranged to define radio cells; and resource management means arranged to manage resources within each cell so as to allocate available resources on request up to predetermined level, and if a subsequent request for a new call is made, placing that call in a queue while reserving the unallocated resource.

The invention will now be described by way of example with reference to the accompanying drawings in which:-
Figure 1 is a schematic diagram of a cellular network; and
Figure 2 shows in more detail parts of the Radio Access Network Subsystem and the Core Network.

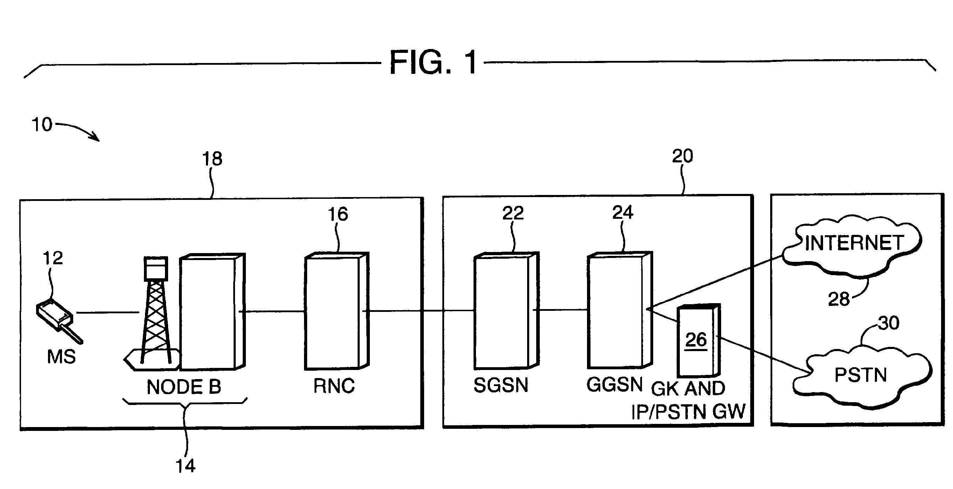

In Figure 1, a wireless telecommunications system 10 comprises a number of mobile stations (MS) 12 and a number of base transceiver stations (node B) 14 connected through a Radio Network Controller (RNC) 16, (all in the Radio Access Network (RAN) 18) to a Core Network (CN) 20. The CN 20 is connected via a PSTN gateway 26 to the Public Switched Telephone Network (PSTN).

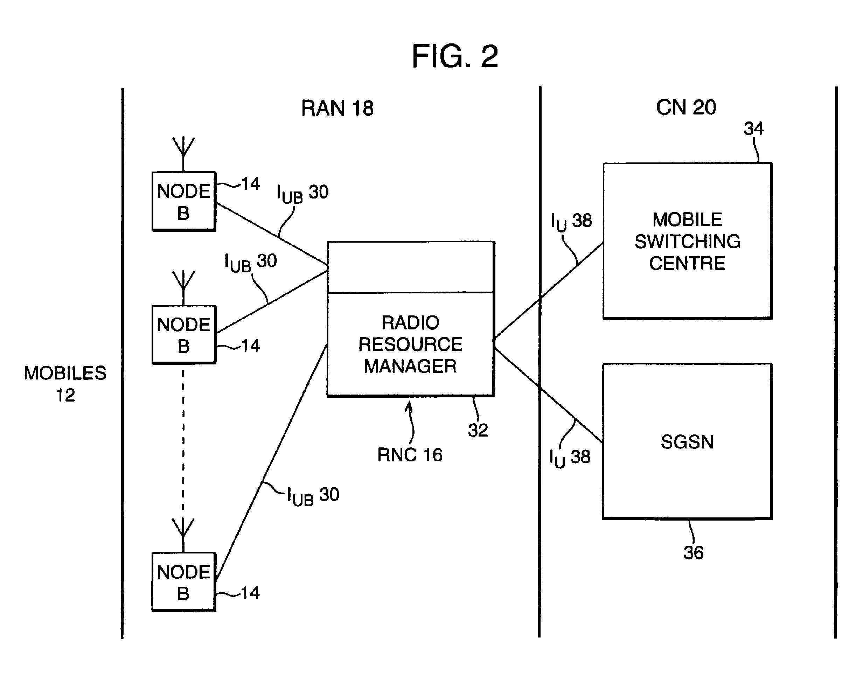

In Figure 2 the RAN 18 and CN 20 are shown in more detail. In the RAN 18, the base stations 14 are connected by interface connections I_{UB} 30 to the RNC 16, which contains a Radio Resource Manager 32.

In the CN 20, a Mobile Switching Centre 34 and a Serving GPRS Support Node 36 are connected by interface connections Iu 38 to the RMC 16.

Each base station 14 has a fixed number of codes to use across the interface to the mobiles 12. In the UMTS reference model, throughput is limited by these codes.

The RNC 16 maintains the links, manages power control, manages call handover etc, and also contains the Radio Resource Manager 32; the RRM contains a logical representation of the array of codes; when a code is selected, the RRM 32 notes this; the resource actually used is radio-based, the RMM represents this in software.

When the RRM 32 notices that, in a particular cell, codes have been allocated up to a level preset by the network operator, the RRM reserves the unallocated code, withholding the code from any user attempting to set up a new call, and placing that attempted call in a queue. However, if an urgent request for resource is made, such as an urgent handover request, the RRM makes the reserved unallocated code available for that urgent handover.

The attempted call is held in a queue either until previously allocated resource becomes available for use in connecting that call, or until a timeout is reached; this may be the usual period set in a GMS system, which is 20 seconds. At the end of that period, a visible or audible indication can be given to a calling mobile that there is congestion.

The level at which resource is reserved will vary with the type of network. In a highly congested, high throughput urban network, the resource may be reserved e.g., as a small number of codes in a CDMA network or as one time slot in a TDMA network.

As previously stated, the level of resource reservation will be decided empirically, depending on the network conditions.

Further, the reservation of resource may in some special conditions not be made: suppose a request for urgent handover is statistically likely to be made every thirty seconds; if the predetermined level at which resource reservation is made is reached just after a request for an urgent handover, then there is a good chance that allocated resource will become available within the next 30 seconds, and a decision may be made by the RRM 32 not to reserve resource; in contrast, if the predetermined level is reached towards the end of a 30 second period since a last urgent request, then the next urgent request is statistically likely to be made imminently, and the RRM reserves resource to meet it. The decision can be made on the basis of the statistical frequency of urgent calls per minute or per hour, or the frequency of call handovers.

A further factor which may be taken into consideration in programming the RRM 32 so as to reserve or allocate resource is the priority level of existing and incoming calls, including calls in soft handover. Different criteria may be set, if the network operator wishes, for mobile-terminated calls with caller being a mobile; for mobile calling to a fixed user, etc.

Another option for the RRM 32 is to hand the new call to another cell, a directed retry, or to push existing calls with lower priority into another cell.

During soft handover, a radio leg or legs within a cell which relate to an existing call can be removed or re-established in a new cell.

## Claims

1. In a cellular radio telecommunications network, a method of managing resources in a cell characterised by allocating available resources on request up to a predetermined level, and if a subsequent request for a new call is made, placing that call in a queue while reserving the unallocated resource.

2. A method according to Claim 1 in which the resource is code in a CDMA network.

3. A method according to Claim 1 in which the resource is time slots in a TDMA network.

4. A method according to any preceding claim further comprising making available the reserved unallocated resource for a call handover request.

5. A method according to any preceding claim in which the requested call is queued until allocated resource becomes free or a time out is reached.

6. A method according to any one of claims 1 to 4 in which the requested call is queued while a directed retry in an alternative cell is set up.

7. A method according to any preceding claim in which the predetermined level of allocated resource is selectable by a network operator.

8. A method according to any preceding claim in which the predetermined level is variable depending on the priority levels of existing calls in the cell and the new call.

9. A cellular radio telecommunications network comprising a plurality of mobile stations (12); a plurality of base stations (14) arranged to define radio cells; and resource management means (32) arranged to manage resources within each radio cell so as to allocate resources on request up to a predetermined level, and if a subsequent request for a new call is made, placing that call in a queue while reserving the unallocated resource.

10. A network according to Claim 9 in which the resource management means comprises a radio resource management means (32) within a radio network controller (16).
